# EUROPÄISCHE PATENTSCHRIFT

(11) **EP 3 638 518 B1**
(45) Veröffentlichungstag und Bekanntmachung des Hinweises auf die Patenterteilung: **16.11.2022**
(21) Anmeldenummer: 18714733.5
(22) Anmeldetag: 19.03.2018
(51) Int. Cl.: B60C 13/00

(54) **FAHRZEUGREIFEN**
VEHICLE TYRE
PNEUMATIQUE DE VÉHICULE

(30) Priorität: 13.06.2017 DE 102017209900
(43) Veröffentlichungstag der Anmeldung: 22.04.2020
(73) Patentinhaber: Continental Reifen Deutschland GmbH, 30165 Hannover (DE)
(72) Erfinder: RITTWEGER, Stefan, 30826 Garbsen (DE); BOGENSCHÜTZ, Peter, 30900 Wedemark (DE)
(74) Vertreter: Continental Corporation
(86) Internationale Anmeldenummer: PCT/EP2018/056812
(87) Internationale Veröffentlichungsnummer: WO 2018/228728

(56) Entgegenhaltungen:
- EP-A2- 3 031 629
- WO-A1-2009/037952
- DE-A1-102013 223 567
- DE-A1-102014 215 094
- DE-U1- 7 834 612

## Beschreibung

Die Erfindung betrifft einen in einer Vulkanisationsform vulkanisierten Fahrzeugreifen in Radialbauart mit einem Laufstreifen, Wulstbereichen und Seitenwänden, wobei die Seitenwände auf ihrer Seitenwandoberfläche Informationen in Form von Flächen aufweisen, welche als eine Textur innerhalb einer ebenen Seitenwandoberfläche gestaltet sind oder welche vice versa als ebene Seitenwandoberfläche innerhalb einer Textur angeordnet sind, wobei
- die Textur eine Texturtiefe aufweist, welche sich in axialer Richtung von der Oberfläche der Textur bis zum Grund der Textur bemisst,
- eine maximale Gravurtiefe bestimmt ist, welche sich in axialer Richtung von der ebenen Seitenwandoberfläche bis zum gedachten, verlängerten Grund der Textur bemisst,
- die maximale Gravurtiefe größer als die Texturtiefe ist, so dass eine Stufe an der Oberfläche der Seitenwand am Übergang von der ebenen Seitenwandoberfläche zur Oberfläche der Textur ausgebildet ist,
- die maximale Gravurtiefe 0,05 bis 0,39 mm beträgt und
- die Texturtiefe 0,05 bis 0,30 mm beträgt.

Hierbei ist in die die Informationen bildenden Flächen eine gemeinsame Textur eingebracht.

Ein derartiger Fahrzeugluftreifen ist aus der EP 3 031 629 A2 bekannt.

Fahrzeugreifen weisen auf ihren Seitenwänden Informationen wie beispielsweise Buchstaben, Zahlen, Symbole oder Bilder in Form von Flächen auf. Die Informationen benennen beispielsweise den Hersteller, die Reifendimension oder bei drehrichtungsgebundenen Reifen die Drehrichtung. Von dem Begriff "Informationen" ausgenommen soll gemäß dieser Erfindung die sogenannte "Legal Beschriftung" sein, bei der es gesetzlich vorgeschrieben ist, diese als erhabene Buchstaben auf dem unteren Bereich der Seitenwand anzuordnen.

Der Begriff "Textur" umfasst eine gerichtete Rauigkeit und eine ungerichtete Rauigkeit, welche auf der Oberfläche der Seitenwand angeordnet ist und ein Relief bildet. Hierdurch wird ein Kontrast zur umgebenden Fläche erzeugt, wodurch die Lesbarkeit der Informationen erhalten ist. Der Kontrast ist durch Reflektion und/oder durch Schattenwurf gebildet.

"Gerichtete Rauigkeit" meint eine "Struktur", welche eine Anhäufung von sich wiederholenden, geordneten Elementen ist. Ein Beispiel einer Struktur ist eine Schraffur.

Die Reifenvulkanisation erfolgt in Heizpressen, bei welcher der Reifenrohling in geeignete Vulkanisierformen eingesetzt und unter Einwirkung von Wärme sowie Druck vulkanisiert wird. Vulkanisierformen für Reifen bestehen unter anderem aus Formsegmenten, welche gemeinsam die radial äußere Oberfläche des Reifens, wie den Laufstreifen sowie die Seitenwand formen, während weitere Segmente die weiteren Bereiche des Reifens formen. Der unvulkanisierte grüne Reifenrohling wird in der Vulkanisierform vulkanisiert und durch Kautschukvernetzungsreaktionen in seinen endgültigen gummielastischen Zustand überführt. Dabei erhält der Reifen seine Profil- und Seitenwandgestaltung durch die entsprechende Negativgestaltung der Formflächen der Formsegmente.

Aus der DE 10 2014 215 094 A1 ist ein Fahrzeugreifen mit zwei Seitenwänden bekannt, wobei zumindest eine Darstellung auf der äußeren Oberfläche des Polymerproduktes angeordnet ist, welche einen flächigen Bereich aufweist, der von einem Muster bedeckt ist. Um eine kontraststärkere Darstellung mit einem richtungsunabhängigeren Kontrast zu erzielen, ist das Muster ein zweidimensionales Punktmuster, indem jeder Punkt ein dreidimensionales Element ist, welches als Erhebung oder Vertiefung der Oberfläche ausgebildet ist, indem jedes Element eine Grundfläche und eine Scheitelhöhe aufweist, indem das Muster Elemente mit einer Scheitelhöhe von 0,10 mm bis 0,4 mm aufweist und indem das Muster Elemente aufweist, deren Abstand zum jeweils nächsten Nachbarn 0,10 mm bis 0,50 mm beträgt, wobei die Abstände zwischen den geometrischen Schwerpunkten der Grundflächen der Elemente gemessen werden.

Die WO2009/037 952 A1 beschäftigt sich ebenfalls mit der Textur- und Gravurtiefe von Seitenwandbeschriftungen. Aus der DE 78 34 612 U1 ist bekannt, Beschriftungen mittels einer Schraffur auf der Reifenseitenwand darzustellen.

Es ist beispielsweise ferner bekannt, die Informationen der Seitenwand als Textur, wie beispielsweise durch eine Schraffur, zu gestalten und diese im Vergleich zu der glatten, diese Schraffur umgebenden Seitenwandoberfläche vertieft anzuordnen. Dieses bedeutet, dass die Oberfläche der Schraffur, welche durch eine Ebene, in welcher die Kämme der Schraffur liegen, gebildet ist, weiter nach axial innen versetzt in Bezug auf die ebene, diese Schraffur umgebene Oberfläche liegt.

Zudem ist aus der DE 10 2013 223 567 A1 bekannt, Informationen mittels eines optoelektronischen lesbaren Codes auf einem Produkt anzubringen. Dieser weist eine Anordnung flächiger Zellen unterschiedlicher Zellenarten auf, die jeweils ein unterschiedliches Oberflächenprofil mit unterschiedlichen Reflexionseigenschaften aufweisen. Das Höhenprofil der Zellen kann dabei gegenüber der Produktfläche abgesenkt sein.

Es ist ebenfalls bekannt, die Informationen als ebene Fläche und die diese Informationen umgebende Fläche texturiert, wie beispielsweise schraffiert, auszubilden. In diesem Fall ist ebenfalls die Oberfläche der Schraffur weiter nach axial innen in Bezug auf die ebene Oberfläche angeordnet. In beiden Fällen ist am Übergang von der ebenen Seitenwandoberfläche zur Texturoberfläche eine Stufe, ein Tiefenversatz, angeordnet.

Die Textur weist eine Texturtiefe auf, welche sich von der höchsten Erhebung der Textur bis zum Grund der Textur bemisst, wobei die Texturtiefe entlang einer senkrecht auf der Oberfläche der Textur stehenden gedachten Geraden bemisst.

Es ist eine maximale Gravurtiefe bestimmt, welche sich von der Oberfläche der glatten Seitenwand bis zum gedachten, konturparallel verlängerten Grund der Textur bemisst, wobei die Gravurtiefe entlang einer senkrecht auf der Oberfläche der glatten Seitenwand stehenden Geraden bemisst.

Die maximale Gravurtiefe ist größer als die Texturtiefe, so dass eine Stufe an der Oberfläche der Seitenwand am Übergang von der ebenen Seitenwandoberfläche zur Oberfläche der Textur ausgebildet ist.

Diese Stufe ist herstellungsbedingt und die Stufenhöhe beträgt bei Reifen des Standes der Technik 0,15 bis 0,30 mm. Die maximale Gravurtiefe beträgt bei den Reifen des Standes der Technik 0,50 bis 0,60 mm und die Texturtiefe beträgt 0,30 mm.

Es hat sich bei der Herstellung einer entsprechenden, gefrästen Vulkanisierform als effizienter erwiesen, zunächst die ebenen Flächen vertieft in die Seitenschale zu fräsen und die übrigen, zu texturierenden Flächen stehen zu lassen, um in einem zweiten Schritt die Textur wie beispielsweise eine Schraffur in diese übrigen Flächen einzubringen. Die Vulkanisierform zeigt das Negativ der Reifenoberflächen. Die Texturtiefe in der Vulkanisierform ist nicht so tief wie die Tiefe der ebenen Fläche. Somit braucht der Fräskopf nicht exakt an den Grenzen zur ebenen Fläche zu stoppen, sondern kann darüber hinausfahren. Da die ebene Fläche tiefer liegt, fährt der Fräskopf oberhalb der ebenen Fläche durch die Luft. Hierdurch ist die Vulkanisierform zeiteffizient und sauber in exakter Abgrenzung der Informationen zur umgebenden Fläche herzustellen. Der mit dieser Vulkanisierform vulkanisierte Reifen weist ein optisch hochwertiges Erscheinungsbild auf.

In der Reifenentwicklung ist man ständig bestrebt, das Erscheinungsbild des Reifens sowie dessen Haltbarkeit weiter zu verbessern und den Reifen hinsichtlich seine Aerodynamik zu optimieren.

Es ist daher die Aufgabe der vorliegenden Erfindung, einen Fahrzeugreifen zur Verfügung zu stellen, dessen Erscheinungsbild sowie dessen Haltbarkeit weiter verbessert ist und welcher hinsichtlich seiner Aerodynamik optimiert ist.

Gelöst wird die Aufgabe erfindungsgemäß dadurch, dass die Stufenhöhe kleiner gleich 0,09 mm ist.

Durch diese Kombination aus verringerter Gravurtiefe, verringerter Texturtiefe und verringerter Stufenhöhe ist eine nahezu "glatte" bis stufenlose Seitenwandoberfläche erhalten, welche Vorteile hinsichtlich der Aerodynamik aufweist. Ebenfalls ist die Haltbarkeit verbessert, da durch die verkleinerte oder fehlende Stufe die Kerbwirkung und dadurch die Gefahr einer Rissbildung verringert ist. Trotz der ebenfalls verringerten Texturtiefe, welche ebenfalls vorteilhaft für die Haltbarkeit des Reifens ist, sind die Informationen auf der Seitenwand sehr gut lesbar.

Mit der insgesamt verringerten Relieftiefe ist es zudem möglich die Seitenwanddicke deutlich zu verringern, insbesondere die äußere Gummilage. Dadurch kann ein deutlich geringerer Rollwiderstand erzielt werden.

Zweckmäßig ist es, wenn die Stufenhöhe kleiner gleich 0,05 mm ist. Hierdurch ist die Aerodynamik und Haltbarkeit des Reifens weiter verbessert. Die Seitenwand weist eine nur sehr geringe bis keine Stufe auf. Es sind die Haltbarkeit und die Aerodynamik des Reifens verbessert.

Vorteilhaft ist es, wenn die maximale Gravurtiefe 0,05 bis 0,35 mm, bevorzugt 0,05 bis 0,30 mm beträgt. Es verbessert sich die Haltbarkeit und die Aerodynamik mit Verringerung der Tiefe. Jedoch ist ein Minimum an Relief / Rauigkeit nötig, um einen zur Lesbarkeit der Informationen notwendigen Kontrast zu erzeugen.

Zweckmäßig ist es, wenn die Texturtiefe 0,01 bis 0,20 mm beträgt. Die Entlüftung ist durch die verringerte Tiefe verbessert, wodurch die qualitative Anmutung des Reifens erhöht ist. Es verbessert sich die Haltbarkeit und die Aerodynamik mit Verringerung der Tiefe. Jedoch ist ein Minimum an Relief / Rauigkeit nötig, um einen zur Lesbarkeit der Informationen notwendigen Kontrast zu erzeugen.

In einer bevorzugten Ausführung der Erfindung liegt die maximale Gravurtiefe in einem Bereich von 0,15 bis 0,25mm, die Texturtiefe in einem Bereich von 0,1 bis 0,2mm. Hierdurch entsteht eine Stufe von 0,05mm.

Das Negativrelief von Vulkanisierformen kann mittels Fräsen oder mit Hilfe von Lasern hergestellt werden. Beim Fräsen sind in Bezug auf die Schraffurtiefen Grenzen vorhanden, die jedoch beim Lasergravieren nicht bestehen. Mittels des Lasers können feinste Texturen in die Vulkanisierform vertieft eingebracht werden. So sind beispielsweise maximale Gravurtiefen von ca. 0,05 mm möglich, welche einen immer noch akzeptablen Kontrast am zu vulkanisierenden Reifens bringen, um die Informationen auf der Reifenseitenwand gut lesbar darzustellen.

Vorzugsweise ist der Fahrzeugluftreifen ein PKW-Reifen.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 einen Querschnitt eines Ausschnittes einer Seitenwand eines Fahrzeugluftreifens gemäß dem Stand der Technik,
Fig. 2 einen Querschnitt eines Ausschnittes einer Seitenwand eines Fahrzeugluftreifens gemäß der Erfindung,
Fig. 3 eine perspektivische Ansicht auf die Oberfläche eines Ausschnittes der Seitenwand gemäß der Erfindung.

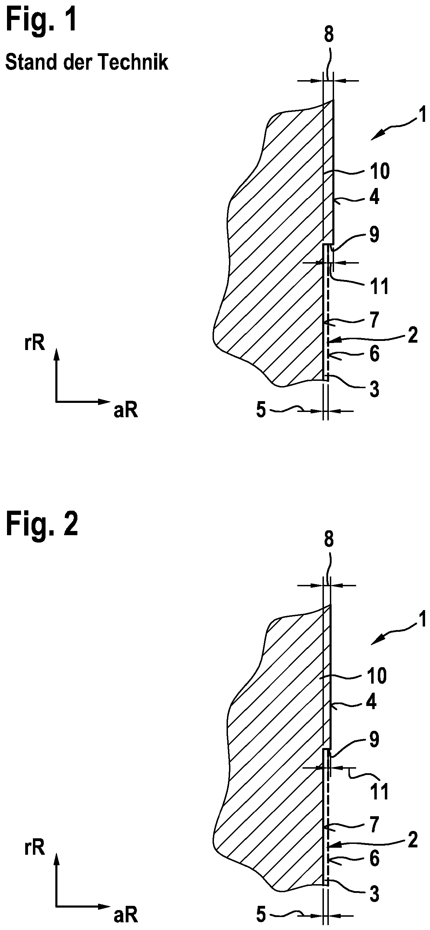

Die Fig. 1 zeigt einen Querschnitt eines Ausschnittes einer Seitenwand eines PKW-Luftreifens in Radialbauart gemäß dem Stand der Technik. Der Luftreifen wurde in einer Vulkanisationsform vulkanisiert und weist einen Laufstreifen, Wulstbereiche (nicht dargestellt) und Seitenwände 1 auf. Auf der Seitenwandoberfläche sind Informationen 2 angeordnet, welche als Schraffur 3 von einer ebenen Seitenwandoberfläche 4 umgeben sind.

Die Schraffur 3 weist eine Texturtiefe 5 von 0,30 mm auf. Die Texturtiefe 5 bemisst sich in axialer Richtung aR von der Oberfläche der Textur 6 bis zum Grund der Textur 7. Die maximale Gravurtiefe 8 beträgt 0,50 bis 0,60 mm und bemisst sich in axialer Richtung von der ebenen Seitenwandoberfläche 4 bis zum gedachten, verlängerten Grund der Textur 10. Die maximale Gravurtiefe 8 ist größer als die Texturtiefe 5, so dass eine Stufe 9 an der Oberfläche der Seitenwand am Übergang von der ebenen Seitenwandoberfläche 4 zur Oberfläche der Textur 6 ausgebildet ist. Diese Stufe 9 weist eine Höhe 11 von 0,20 bis 0,30 mm.

Die Fig. 2 zeigt einen Querschnitt eines Ausschnittes einer Seitenwand 1 eines Fahrzeugluftreifens gemäß der Erfindung. Der Ausschnitt der Seitenwand 1 der Fig. 2 unterscheidet sich darin von dem Ausschnitt der Fig. 1, dass die Stufe 9 eine Höhe 11 kleiner gleich 0,09 mm ist, dass die maximale Gravurtiefe 8 0,05 bis 0,40 mm beträgt und dass die Texturtiefe 5 0,05 bis 0,30 mm beträgt. Hierdurch ist eine fast "glatte" Seitenwand mit minimaler Stufenhöhe 11 und mit geringer Texturtiefe 5 erhalten. Hierdurch ist der Reifen hochqualitativ hinsichtlich der Reifenentlüftung zu fertigen, ist hinsichtlich der Seitenwand aerodynamischer und ebenfalls aufgrund geringerer Kerbwirkungen haltbarer.

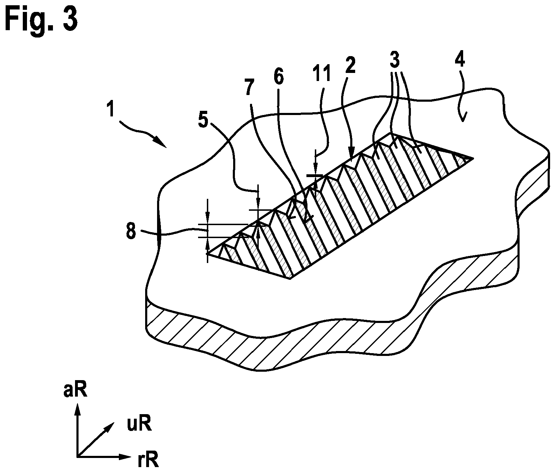

Die Fig. 3 zeigt eine perspektivische Ansicht auf die Oberfläche eines Ausschnittes der Seitenwand 1 gemäß der Erfindung. Die Seitenwandoberfläche weist Informationen 2 auf, welche als Schraffur 3 in einer ebenen Seitenwandoberfläche 4 angeordnet sind. Die Stufenhöhe 11 ist kleiner gleich 0,09 mm und beträgt hier 0,01 mm. Die maximale Gravurtiefe 8 beträgt 0,05 bis 0,40 mm und die beträgt Texturtiefe 5 0,05 bis 0,30 mm.

### Bezugszeichenliste

- 1: Seitenwand
- 2: Information
- 3: Schraffur
- 4: ebene Seitenwandoberfläche
- 5: Texturtiefe
- 6: Oberfläche der Textur
- 7: Grund der Textur
- 8: maximale Gravurtiefe
- 9: Stufe
- 10: konturparallel verlängerter Grund der Textur
- 11: Stufenhöhe

- rR: radiale Richtung
- aR: axiale Richtung
- uR: Umfangsrichtung

## Patentansprüche

1. In einer Vulkanisationsform vulkanisierter Fahrzeugreifen in Radialbauart mit einem Laufstreifen, Wulstbereichen und Seitenwänden (1), wobei die Seitenwände (1) auf ihrer Seitenwandoberfläche Informationen (2) in Form von Flächen aufweisen, die in einer ebenen Seitenwandoberfläche (4) gestaltet sind, wobei in die die Informationen bildenden Flächen eine gemeinsame Textur eingebracht ist, oder welche als ebene Seitenwandoberfläche in einer Textur angeordnet sind, wobei
- die Textur (3) eine Texturtiefe (5) aufweist, welche sich in axialer Richtung (aR) von der Oberfläche der Textur (6) bis zum Grund der Textur (7) bemisst,
- eine maximale Gravurtiefe (8) bestimmt ist, welche sich in axialer Richtung (rR) von der ebenen Seitenwandoberfläche (4) bis zum gedachten, verlängerten Grund der Textur (10) bemisst,
- die maximale Gravurtiefe (8) größer als die Texturtiefe (5) ist, so dass eine Stufe (9) an der Oberfläche der Seitenwand am Übergang von der ebenen Seitenwandoberfläche (4) zur Oberfläche der Textur (6) ausgebildet ist,
- die maximale Gravurtiefe (8) 0,05 bis 0,39 mm beträgt und
- die Texturtiefe (5) 0,05 bis 0,30 mm beträgt,
**dadurch gekennzeichnet,**
**dass** die Stufenhöhe (11) kleiner gleich 0,09 mm ist.

2. Fahrzeugreifen nach Anspruch 1, **dadurch gekennzeichnet, dass** die Stufenhöhe (11) kleiner gleich 0,05 mm ist.

3. Fahrzeugreifen nach Anspruch 1 oder 2, **dadurch gekennzeichnet, dass** die maximale Gravurtiefe (8) 0,05 bis 0,35 mm, bevorzugt 0,05 bis 0,30 mm beträgt.

4. Fahrzeugreifen nach einem der Ansprüche 1 bis 3, **dadurch gekennzeichnet, dass** die Texturtiefe (5) 0,01 bis 0,20 mm beträgt.

5. Fahrzeugreifen nach einem der Ansprüche 1 bis 4, **dadurch gekennzeichnet, dass** dieser ein PKW-Luftreifen ist.

## Claims

1. Vehicle tyre of radial construction which is vulcanized in a vulcanization mould with a tread strip, bead regions and sidewalls (1), the sidewalls (1) having information items (2) on their sidewall surface in the form of surface areas which are designed in a planar sidewall surface (4), a common texture being introduced into the surface areas which form the information items, or which are arranged as a planar sidewall surface in a texture,
- the texture (3) having a texture depth (5) which is dimensioned in the axial direction (aR) from the surface of the texture (6) as far as the bottom of the texture (7),
- a maximum engraving depth (8) being defined which is dimensioned in the axial direction (aR) from the planar sidewall surface (4) as far as the imaginary, extended bottom of the texture (10),
- the maximum engraving depth (8) being greater than the texture depth (5), with the result that a step (9) is configured on the surface of the sidewall at the transition from the planar sidewall surface (4) to the surface of the texture (6),
- the maximum engraving depth (8) being from 0.05 to 0.39 mm, and
- the texture depth (5) being from 0.05 to 0.30 mm,
**characterized**
**in that** the step height (11) is smaller than or equal to 0.09 mm.

2. Vehicle tyre according to Claim 1, **characterized in that** the step height (11) is smaller than or equal to 0.05 mm.

3. Vehicle tyre according to Claim 1 or 2, **characterized in that** the maximum engraving depth (8) is from 0.05 to 0.35 mm, preferably from 0.05 to 0.30 mm.

4. Vehicle tyre according to one of Claims 1 to 3, **characterized in that** the texture depth (5) is from 0.01 to 0.20 mm.

5. Vehicle tyre according to one of Claims 1 to 4, **characterized in that** it is a passenger car pneumatic tyre.

## Revendications

1. Pneumatique de véhicule de type radial, ledit pneumatique étant vulcanisé dans un moule de vulcanisation et comprenant une bande de roulement, des zones de bourrelet et des flancs (1), les flancs (1) comportant sur leur surface de flanc des informations (2) se présentant sous la forme de surfaces qui sont formées dans une surface de flanc plane (4), une texture commune étant introduite dans les surfaces formant les informations ou lesdites informations étant disposées sous la forme d'une surface de flanc plane dans une texture,
- la texture (3) ayant une profondeur de texture (5) qui est mesurée dans la direction axiale (aR) depuis la surface de la texture (6) jusqu'au fond de la texture (7),
- une profondeur de gravure maximale (8) étant déterminée qui est mesurée dans la direction axiale (rR) de la surface de flanc plane (4) jusqu'au fond imaginaire prolongé de la texture (10),
- la profondeur de gravure maximale (8) étant supérieure à la profondeur de texture (5) de sorte qu'un gradin (9) est formé sur la surface du flanc au niveau de la transition de la surface plane de flanc plane (4) à la surface de la structure (6),
- la profondeur de gravure maximale (8) étant de 0,05 à 0,39 mm et
- la profondeur de texture (5) étant de 0,05 à 0,30 mm,
**caractérisé en ce que**
la hauteur de gradin (11) est inférieure ou égale à 0,09 mm.

2. Pneumatique de véhicule selon la revendication 1, **caractérisé en ce que** la hauteur de gradin (11) est inférieure ou égale à 0,05 mm.

3. Pneumatique de véhicule selon la revendication 1 ou 2, **caractérisé en ce que** la profondeur de gravure maximale (8) est de 0,05 à 0,35 mm, de préférence de 0,05 à 0,30 mm.

4. Pneumatique de véhicule selon l'une des revendications 1 à 3, **caractérisé en ce que** la profondeur de texture (5) est de 0,01 à 0,20 mm.

5. Pneumatique de véhicule selon l'une des revendications 1 à 4, **caractérisé en ce que** ledit pneumatique de véhicule est un pneumatique de véhicule de tourisme.
